# EUROPÄISCHE PATENTSCHRIFT

(11) **EP 3 372 448 B1**
(45) Veröffentlichungstag und Bekanntmachung des Hinweises auf die Patenterteilung: **13.05.2020**
(21) Anmeldenummer: 18160459.6
(22) Anmeldetag: 07.03.2018
(51) Int. Cl.: B60P 3/04

(54) **SICHERUNGSEINRICHTUNG**
SAFETY DEVICE
DISPOSITIF DE FIXATION

(30) Priorität: 10.03.2017 DE 202017101375 U; 18.05.2017 DE 202017102985 U
(43) Veröffentlichungstag der Anmeldung: 12.09.2018
(73) Patentinhaber: Humbaur Holding GmbH & Co. KG, 86368 Gersthofen (DE)
(72) Erfinder: KLIER, Reinhold, 85551 Kirchheim (DE); JUNGMEIER, Anton, 85386 Eching (DE)
(74) Vertreter: Kilchert, Jochen

(56) Entgegenhaltungen:
- EP-A1- 2 366 585
- DE-U1- 20 313 374
- GB-A- 2 457 761
- US-A- 4 355 594

## Beschreibung

Die Erfindung betrifft eine Sicherungseinrichtung für eine Boxenstange mit den Merkmalen im Oberbegriff des Hauptanspruchs.

Eine solche Sicherungseinrichtung für eine Boxenstange ist aus der DE 20 2012 103 811 U1 bekannt. Sie weist eine an einer Tierbox bzw. am Aufbau eines Tiertransporters montierbare Halterung mit einer Arretierung für die Boxenstange und mit einer manuell bedienbaren Löseeinrichtung für die Arretierung auf. Die Löseeinrichtung ist an der Boxenstange angeordnet und ist Bestandteil des stangenseitigen Arretiermittels.

Die DE 89 04 202 U1 und DE 20 2007 011 220 U1 zeigen Absperrvorrichtung für eine Tierbox mit einer Arretierung für die Boxenstange, die von einem Steckhaken am Stangenende und einem wandseitigen Aufnahmering sowie einer Splintsicherung gebildet wird. Zum Lösen der Arretierung wird der Splint gezogen. Außerdem ist eine Notentriegelung vorgesehen, die von einem Schlitten mit dem Aufnahmering und einer nach unten offenen wandfesten Schlittenführung sowie einem Riegelbolzen an der Schlittenunterseite gebildet wird. Bei der DE 89 04 202 U1 kann der mit einem Gewinde versehene Riegelbolzen von außerhalb der Tierbox abgeschraubt und entfernt werden. Bei der DE 20 2007 011 220 U1 weicht der Riegelbolzen bei Überlast automatisch gegen die Kraft einer Rückstellfeder aus. In beiden Fällen bleibt die Arretierung der Boxenstange geschlossen.

Die EP 2 366 585 A1 offenbart Verriegelungseinrichtung für eine Boxenstange in einer Pferdebox, wobei die Verriegelungseinrichtung einen verschiebbaren Schlitten aufweist, der durch eine Feder vorgespannt ist. Zur Entriegelung der Boxenstange muss die Betätigungsstange entgegen einer Federkraft der Feder gezogen werden, so dass die Boxenstange aus der Verriegelungseinrichtung nach unten herausfällt. Die Verriegelungseinrichtung ist innerhalb der Pferdebox angeordnet, so dass ein Bediener zum Entriegeln der Boxenstange in die Nähe eines transportierten Pferds gelangt. Dies kann bei panisch reagierenden Pferden gefährlich sein.

Weitere Verriegelungseinrichtungen Pferdeboxen sind aus DE 203 13 374 U1, US 4,355,594 und GB 2 457 761 A bekannt.

Es ist Aufgabe der vorliegenden Erfindung, eine verbesserte Sicherungstechnik aufzuzeigen.

Die Erfindung löst diese Aufgabe durch eine Sicherungseinrichtung für eine Boxenstange in einer Tierbox, insbesondere Pferdebox, wobei die Sicherungseinrichtung eine an der Tierbox montierbare Halterung mit einer Arretierung für die Boxenstange und einer manuell bedienbaren Löseeinrichtung zum Lösen der Arretierung aufweist, und wobei die Löseeinrichtung an der Halterung angeordnet ist und ein auf die Arretierung wirkendes Lösemittel aufweist. Das Lösemittel ist mit mehreren Bedienmitteln verbunden, die innerhalb und außerhalb der Tierbox anordenbar sind, wobei die innerhalb und außerhalb der Tierbox anordenbaren Bedienmittel gemeinsam bedienbar sind oder getrennt und unabhängig voneinander bedienbar sind.

Die Löseeinrichtung kann von innerhalb und außerhalb der Tierbox mit dortigen Bedienmitteln manuell bedient werden. Die Löseeinrichtung ist dabei an der Halterung angeordnet und weist ein auf die Arretierung wirkendes Lösemittel auf, das mit den mehreren Bedienmitteln verbunden ist. Die Bedienmittel können miteinander gekoppelt sein. Sie können alternativ voneinander entkoppelt sein und unabhängig voneinander bedienbar sein.

Mit der von außerhalb der Tierbox bedienbaren Löseeinrichtung ist eine Paniksicherung möglich. Die Arretierung kann gelöst werden, ohne dass der Bediener die Tierbox mit dem in Panik befindlichen Tier betreten muss. Bei gelöster Arretierung kann das Tier die Boxenstange von der Halterung wegschieben und entfernen.

Bei einer bevorzugten Ausführungsform weist die Arretierung (10) zusammenwirkende Arretiermittel (16,17) an der Halterung (9) und an der Boxenstange (6) auf, wobei das eine Arretiermittel (17) an der Halterung (9) beweglich und gegen einen Rücksteller (21) ausweichfähig geführt sowie von der Löseeinrichtung (11) beaufschlagt ist.

Durch die Löseeinrichtung kann im Bedarfsfall die Arretierung durch eine manuelle Bedienung geöffnet werden. Beim Öffnen werden die stangen- und halterungsseitigen Arretiermittel voneinander getrennt, wobei das stangenseitige Arretiermittel von der Halterung entfernt werden kann. Das von der Löseeinrichtung beaufschlagte Arretiermittel kann in oder an der Halterung aufgenommen werden. Es kann beweglich geführt sein, vorzugsweise gegen die Kraft eines Rückstellers, z.B. einer rückstellenden Feder. Beim Lösen der Arretierung bleibt die Halterung intakt und kann an ihrer Montagestelle an der Wand einer Tierbox oder an der Aufbauwand eines Tiertransporters verbleiben.

Die Sicherungseinrichtung kann eine Bedienungssicherung für ein Bedienmittel aufweisen. Die Bedienungssicherung kann Fehlbedienungen und/oder Fehlfunktionen des Bedienmittels vermeiden. Hierfür kann z.B. das beaufschlagte Bedienmittel blockiert werden. Zum Lösen kann eine zusätzliche Bedienmaßnahme, insbesondere Bedienbewegung, z.B. eine Zweihandbedienung, erforderlich sein.

Die Bedienungssicherung kann vorteilhafterweise dem außerhalb der Tierbox anordenbaren bzw. angeordneten Bedienmittel zugeordnet sein. Hierdurch kann ein versehentliches Lösen der Arretierung von außerhalb der Tierbox verhindert oder zumindest erschwert werden. Die Bedienungssicherung kann alternativ oder zusätzlich dem innerhalb der Tierbox anordenbaren bzw. angeordneten Bedienmittel zugeordnet sein. Es kann eine zusätzliche Sicherheit gegen Fehlbedienung durch das Tier bieten.

Der Einsatz einer Bedienungssicherung ist insbesondere in Verbindung mit entkoppelten Bedienelementen von Vorteil. Trotz Blockade eines Bedienelements durch seine Bedienungssicherung kann das andere Bedienelement benutzt und die Arretierung der Sicherungseinrichtung bedient werden. Dies gilt für die normale boxinterne Bedienung beim Einladen oder Ausladen eines Tiers und auch bei der Panikentriegelung.

Die bevorzugte Ausbildung eines auf die Arretierung wirkenden Lösemittels als Drehsteller bietet eine erhöhte Sicherheit gegen Fehlbedienung. Das Tier kann einen Drehsteller nicht lösen. Außerdem eignet sich der Drehsteller besonders gut für eine Bedienung mit ein oder mehreren Bedienmitteln und von innerhalb sowie außerhalb der Tierbox. Zudem ergeben sich günstige Kraft- und Bewegungsverhältnisse zum Lösen der Arretierung, insbesondere bei Einsatz einer Drehnocke. Ein Drehsteller hat auch Vorteile für eine Entkoppelung und eigenständige Bedienbarkeit der Bedienmittel.

Die Drehnocke kann mit einem ebenen Nockenabschnitt eine definierte Anschlagposition für das federbelastete Arretiermittel an der Halterung bilden. Andererseits kann hierüber die Drehposition der Drehnocke gesichert werden. Versehentliche Nockendrehungen können verhindert werden.

Günstig ist eine lineare Beweglichkeit und insbesondere eine lineare Führung des einen Arretiermittels an der Halterung. In Verbindung mit einem Drehsteller wird dabei die Drehbedienung in eine Linearbewegung des Arretiermittels umgesetzt. Ferner ist es günstig, wenn das Arretiermittel an der Boxenstange als Ringöse und das Arretiermittel an der Halterung als Riegel ausgebildet ist. Das Arretiermittel bzw. der Riegel kann eine einzelne Riegelnase oder eine Riegelleiste mit mehreren Riegelnasen aufweisen. Die Riegelnase kann formschlüssig in die Ringöse des anderen Arretiermittels eingreifen. Eine schräge Angleitfläche an der Nase erleichtert dabei die Bedienung und das Schließen der Arretierung durch einstecken und einschnappen.

Die Halterung kann an ihrem Gehäuse eine oder mehrere maulartige Aufnahmen zum Einführen des Arretiermittels an der Boxenstange aufweisen, die bevorzugt am Gehäuserand angeordnet sind und dort mit ihrer Maulöffnung münden. Die Boxenstange kann dadurch besonders einfach durch eine Schiebebewegung eingeführt und abgenommen werden. In der Aufnahme ist außerdem die Lage des stangenseitigen Arretiermittels durch Formschluss definiert und gesichert. Die Arretiermittel können sicher ineinander greifen.

Günstig ist auch der Umstand, dass die Boxenstange am Halter in mehreren unterschiedlichen Positionen, insbesondere in unterschiedlichen Höhenlagen, angeordnet und arretiert werden kann. Über die Löseeinrichtung können alle Arretierstellen einheitlich bedient werden.

Das Lösemittel kann eine andere konstruktive Gestaltung und Kinematik haben, z.B. als Schiebesteller oder dgl. für eine translatorische Lösebewegung. Es ist auch eine kombinierte translatorische und rotatorische Lösebewegung bei entsprechender Lösemittelgestaltung möglich.

Das Lösemittel kann ferner die Arretierung in der bevorzugten Ausführungsform einseitig beaufschlagen und bewegen, z.B. auf Zug oder Druck, wobei der Rücksteller die Rückstellbewegung bewirkt. Das Lösemittel kann die Arretierung alternativ beidseitig beaufschlagen. Es kann dabei das Öffnen und Schließen der Arretierung bewirken und kann entsprechen konstruktiv ausgebildet sein. Das Lösemittel kann z.B. das Arretiermittel zwischen definierten und ggf. federbelasteten Rastpositionen in der Öffnungs- und Schließstellung bewegen.

Die Sicherungseinrichtung, insbesondere ihre Halterung, kann eine bevorzugt optische Anzeige für die Funktion oder den Zustand der Arretierung aufweisen. Ein Bediener kann dadurch schnell und sicher verifizieren ob die Arretierung korrekt geschlossen ist und die Sicherungseinrichtung bzw. die Boxenstange ihre Funktion erfüllt.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine Tierbox mit einem Tier sowie einer Sicherungseinrichtung in einem Fahrzeuganhänger in einer aufgebrochenen Seitenansicht,
- Figur 2:: eine perspektivische Ansicht einer zweiständigen Boxenanordnung mit einer Sicherungseinrichtung und einer Boxenstange,
- Figur 3:: eine Frontansicht der Tierbox mit der Boxenstange und der Sicherungseinrichtung gemäß Pfeil III von Figur 2,
- Figur 4:: eine perspektivische Vorderansicht der Boxenstange und der Sicherungseinrichtung,
- Figur 5:: eine andere abgebrochene und vergrößerte perspektivische Ansicht der Sicherungseinrichtung ohne Boxenwand,
- Figur 6:: eine perspektivische Frontansicht einer Halterung der Sicherungseinrichtung,
- Figur 7:: eine aufgebrochene Darstellung der Halterung von Figur 6 in Frontansicht,
- Figur 8:: eine aufgebrochene Darstellung der Halterung von Figur 6 in Rückansicht und mit arretierter Boxenstange,
- Figur 9:: eine aufgebrochene und vergrößerte perspektivische Detailansicht des oberen Bereichs der Halterung mit einem außenseitigen Bedienmittel,
- Figur 10 und 11:: Varianten der Sicherungseinrichtung in verschiedenen Ansichten, und
- Figur 12:: eine perspektivische Explosionsansicht einer Sicherungseinrichtung mit selbstrückstellendem, äußeren Bedienmittel.

Die Erfindung betrifft eine Sicherungseinrichtung (8) und ein Sicherungsverfahren für eine Boxenstange (6) in einer Tierbox (3). Die Erfindung betrifft ferner eine Tierbox (3) mit einer Sicherungseinrichtung (8) und einer Boxenstange (6) sowie ein damit ausgerüstetes Fahrzeug (1).

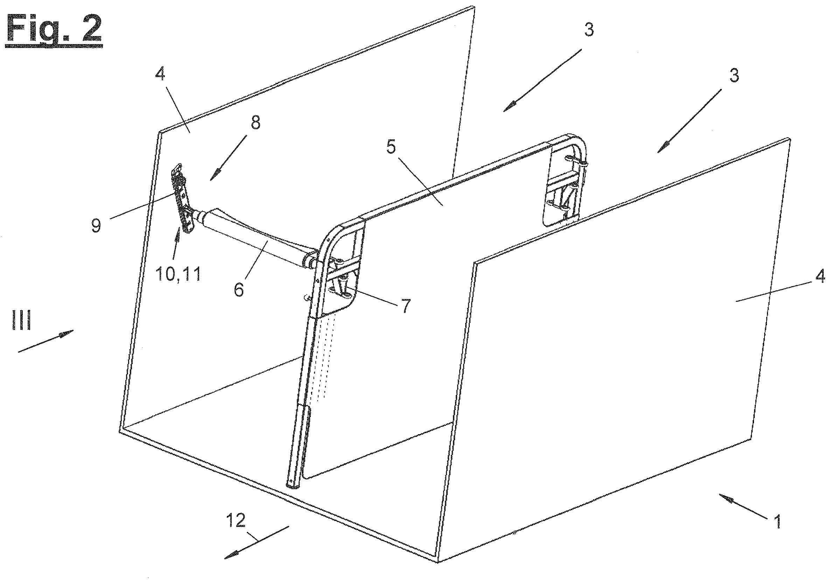

Die Tierbox (6) ist beispielhaft in Figur 2 und in einer Doppelausführung dargestellt. Die einzelne Tierbox (3) besteht aus einem Boden und einer seitlichen aufrechten Boxenwand (4). Diese kann bei der Anordnung in einem Fahrzeug (1) von einer seitlichen Aufbauwand gebildet werden. Die anderen Seitenwand der Tierbox (3) kann von einer in Figur 2 gezeigten Mittelwand (5) zwischen zwei Tierboxen oder bei einer einständigen Ausführung von einer weiteren seitlichen Boxenwand oder Aufbauwand (4) gebildet werden. Die Tierbox (3) ist für beliebige Arten von Tieren (2), insbesondere für Pferde, vorgesehen und ausgebildet.

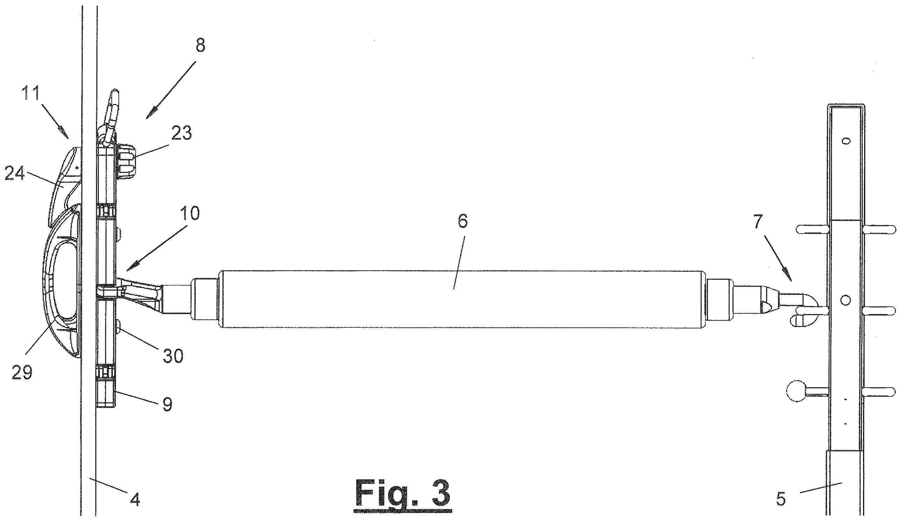

In einer Tierbox (3) ist eine Sicherungseinrichtung (8) für eine Boxenstange (6) angeordnet. Die Sicherungseinrichtung (8) kann die Boxenstange (6) beinhalten oder nicht. Die Sicherungseinrichtung (8) kann außerdem eine in Figur 2 und 3 schematisch dargestellte Lagerung (7) für die Boxenstange (6) aufweisen. Die Boxenstange (6) kann an einem Ende mit der Lagerung (7) und am anderen Ende mit einer Halterung (9) der Sicherungseinrichtung (8) verbunden werden.

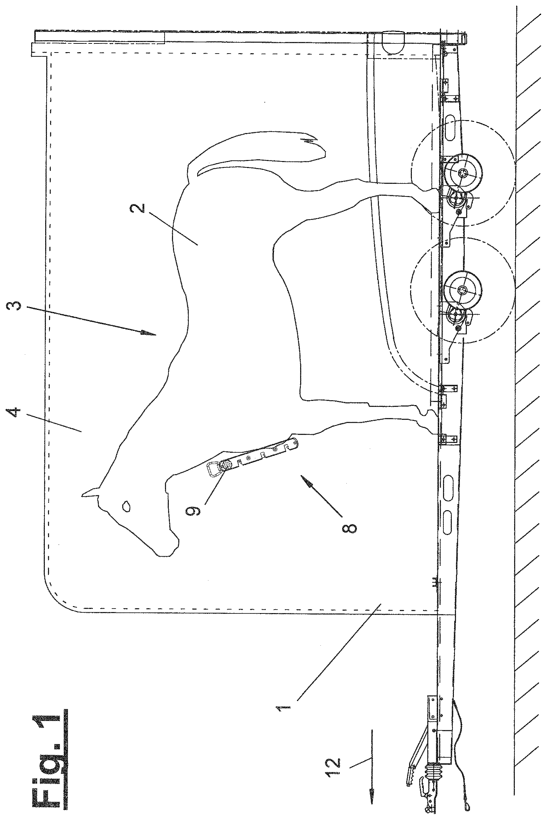

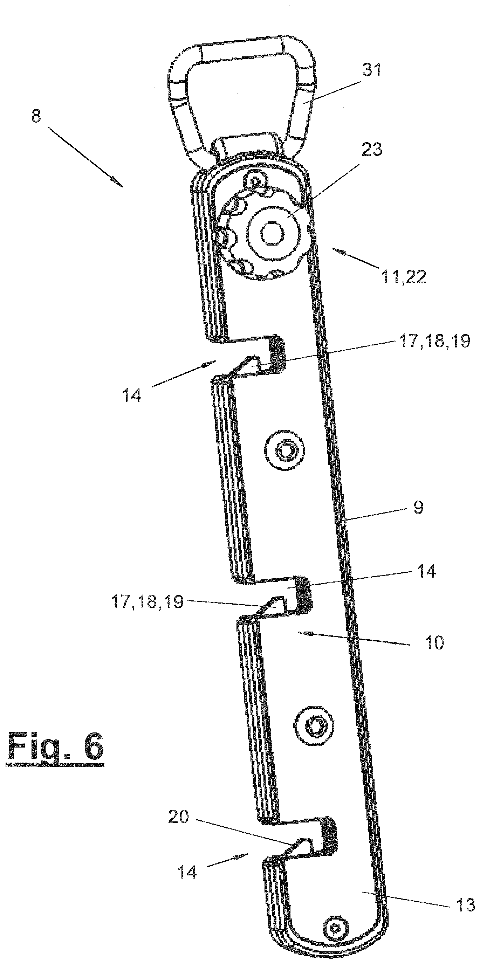

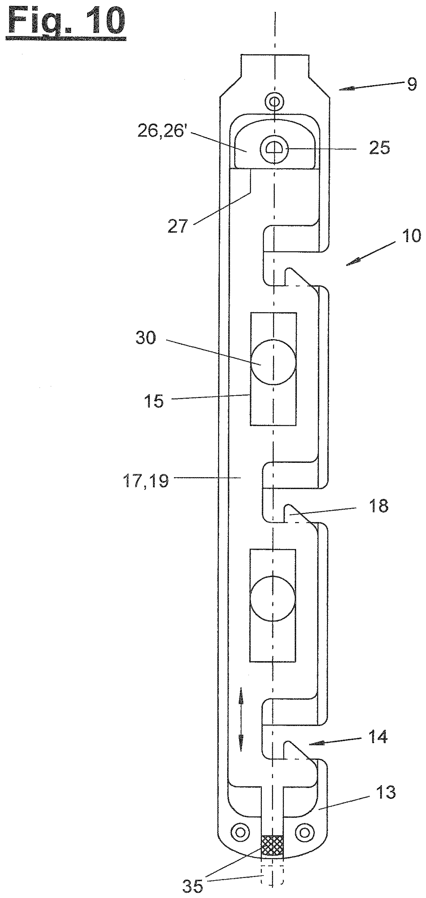

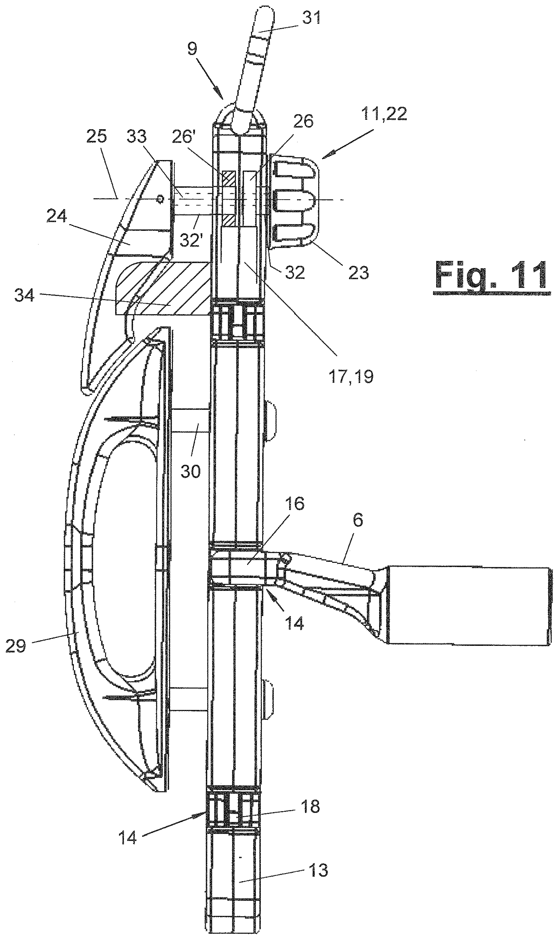

Die Sicherungseinrichtung (8) kann unterschiedlich ausgebildet sein und unterschiedlich funktionieren. Figur 1 bis 9 zeigen eine erste Variante. In Figur 10 und 11 sind Abwandlungen dargestellt.

Die Sicherungseinrichtung (8) kann ein Bestandteil der Tierbox (3) oder eines Fahrzeugs (1) sein. Sie kann alternativ eine separate Einrichtung sein, die an einer bestehenden Tierbox (3) nachgerüstet oder umgerüstet werden kann.

Das in Figur 1 dargestellte Fahrzeug (1) kann in beliebig geeigneter Weise ausgebildet sein. Vorzugsweise ist es als Fahrzeuganhänger mit einem Fahrwerk, einem Chassis mit einer Deichsel und einer Anhängerkupplung sowie einem Aufbau ausgebildet. Der Fahrzeuganhänger hat keinen eigenen Fahrantrieb und wird mit einem Zugfahrzeug über die Anhängerkupplung lösbar verbunden. In einer anderen und nicht dargestellten Ausführungsform kann das Fahrzeug (1) ein Kraftfahrzeug, insbesondere ein Lastkraftwagen sein. Bei diesen Ausführungsbeispielen ist die Tierbox (3) mobil und fahrzeugfest ausgebildet. In einer anderen Variante kann sie als Wechselcontainer ausgestaltet sein. Ferner ist eine stationäre Ausbildung und Anordnung einer Tierbox (3) möglich.

Die Tierbox (3) kann bei den verschiedenen genannten Varianten an der Oberseite ein Dach und an der Vorder- und Rückseite einen geeigneten Verschluss aufweisen. Bei einem Fahrzeug (1) können die Verschlüsse von einer stationären Frontwand des Aufbaus und von einer öffenbaren Rückwand, z.B. einer um eine oder mehrere Achsen schwenkbaren Heckklappe, gebildet werden. Die Frontwand kann ebenfalls bereichsweise beweglich sein und kann eine Türe und/oder eine Frontklappe beinhalten.

In der Tierbox (3) können an der Vorderseite und/oder an der Hinterseite eine Boxenstange (6) und eine Sicherungseinrichtung (8) angeordnet sein.

Die Boxenstange (6) ist in den gezeigten Ausführungsbeispielen als massive und in sich starre Stange ausgebildet, die eine gerade oder gebogene Form haben kann. Die Stange kann an einer oder mehreren Seiten ihres Umfangs eine Polsterung für das Tier (2) aufweisen.

Unter einer Boxenstange (6) werden im Sinne der Erfindung auch andere Ausbildungsformen verstanden. Dies können z.B. labile oder bewegliche Stangen, Gurte, plattenartige oder schürzenartige Gebilde oder dgl. sein.

Die Boxenstange (6) erstreckt sich quer durch die Tierbox (3) und kann mit den Boxenwänden (4) oder der Mittelwand (5) über die Lagerung (7) und über die Halterung (9) verbunden werden. Figur 2, 3 und 4 zeigen diese Anordnung.

Die Lagerung (7) kann gelenkig sein. Sie besteht z.B. aus einem U-förmig gekrümmten Einhängehaken am Stangenende und mindestens einem Ring an der Boxenwand (4) oder der Mittelwand (5). In der gezeigten Ausführungsform sind mehrere Ringe in einer Reihe übereinander angeordnet. Sie können dabei in Längsrichtung der Tierbox (3) zueinander versetzt sein. Hierbei kann sich eine schräge Reihe ergeben, die in der durch einen Pfeil symbolisierten VorwärtsFahrtrichtung (12) geneigt ist. Hierdurch lässt sich die Boxenstange (6) in unterschiedlichen Höhenlagen in der Tierbox (3) montieren und bedarfsweise umhängen. In einer anderen und nicht dargestellten Ausführungsform kann statt der vereinfachten Lagerung (7) die nachfolgend beschriebene Halterung (9) an beiden Seitenwänden (4,5) der Tierbox (3) angeordnet sein.

Die Sicherungseinrichtung (8) weist in den verschiedenen Varianten jeweils zumindest eine an der Tierbox (3) montierbare oder montierte Halterung (9) mit einer Arretierung (10) für die Boxenstange (6) und einer manuell bedienbaren Löseeinrichtung (11) auf. Mit der Löseeinrichtung (11) kann die Arretierung (10) gelöst werden, so dass die Boxenstange (6) von einem Bediener von Hand oder vom Tier (2) von der Halterung (9) getrennt und entfernt werden kann. Sie kann dabei um die Lagerung (7) schwenken. Die Löseeinrichtung (11) ist in Figur 1 bis 9 und Figur 10, 11 unterschiedlich ausgebildet.

Die Arretierung (10) weist zusammenwirkende Arretiermittel (16,17) an der Halterung (9) und an der Boxenstange (6) auf. In der Schließstellung greifen die Arretiermittel (16,17) z.B. formschlüssig ineinander und halten die Boxenstange (6) an der Halterung (9) fest. Alternativ ist ein anderes Zusammenwirken möglich.

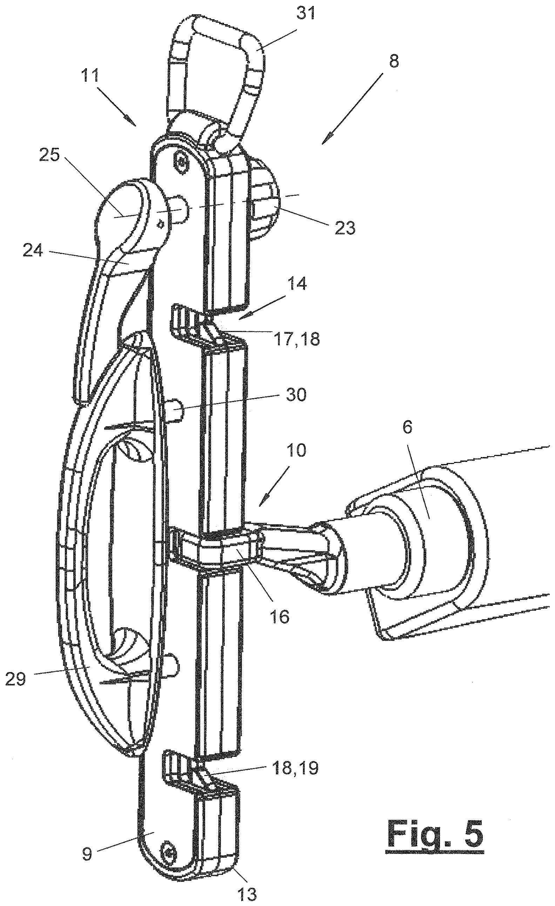

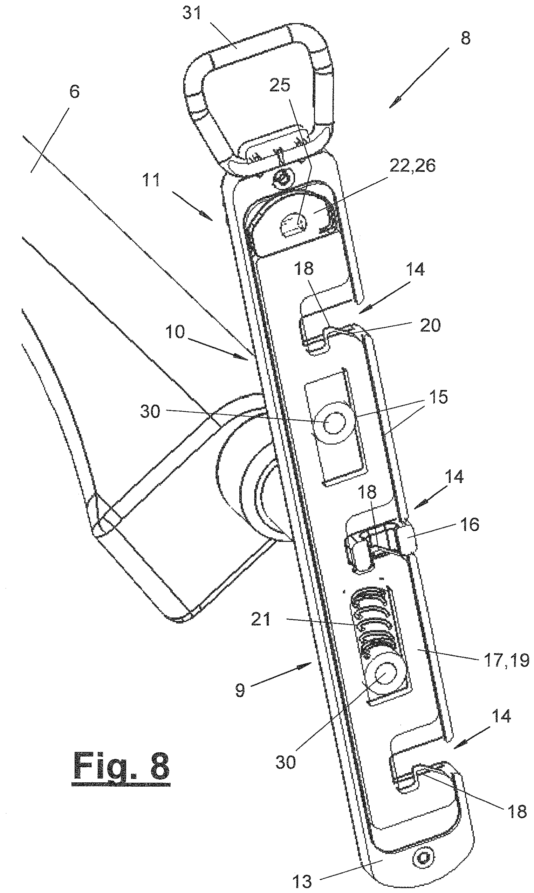

An der Boxenstange (6), insbesondere an ihrem Stangenende, ist vorzugsweise ein einzelnes Arretiermittel (16) angeordnet. Dieses ist z.B. als Ringöse ausgebildet. Figur 5 und 8 zeigen diese Ausbildung in perspektivischer Seitenansicht und im Schnitt. Die Ringöse (16) hat z.B. eine zylindrische Durchgangsöffnung und einen rechteckigen Außenumfang.

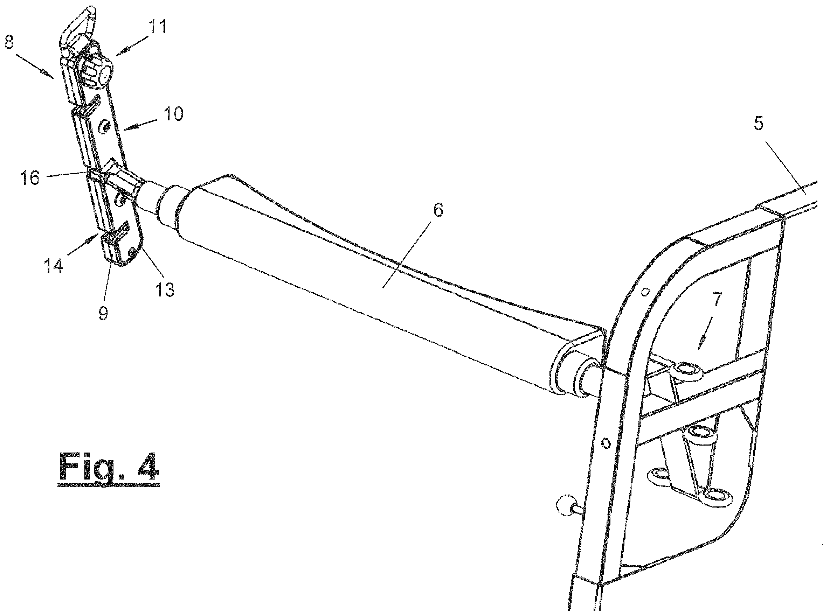

Die Ringöse (16) hat eine liegend, insbesondere horizontal oder etwas schräg ausgerichtete Hauptebene mit einer aufrechten Durchgangsöffnung. Die Halterung (9) kann eine in Figur 1 und 2 gezeigte Schräglage mit einer Neigung in Fahrtrichtung (12) haben. In der Einbaulage gemäß Figur 2 und 4 kann das Arretiermittel (16) die erwähnte Schräglage oder Drehung gegenüber der horizontal zum Tier (2) gerichteten Polsterung der Boxenstange (6) aufweisen.

Das andere Arretiermittel (17) ist an der Halterung (9) angeordnet. Es ist dabei beweglich und gegen eine Feder (21) ausweichfähig an der Halterung (9) geführt. Das halterungsseitige Arretiermittel (17) wird von der Löseeinrichtung (11) beaufschlagt. Bei Betätigung wird es relativ zur Halterung (9) und zum Arretiermittel (16) an der Boxenstange (6) bewegt. Das halterungsseitige Arretiermittel (17) wird vorzugsweise linear bewegt. Alternativ ist eine rotatorische Bewegung oder eine Kombination von linearer und rotatorischer Bewegung möglich.

Das halterungsseitige Arretiermittel (17) ist als Riegel ausgebildet. Es weist eine einzelne Riegelnase (18) oder eine Riegelleiste (19) mit mehreren Riegelnasen (18) auf. Die Riegelnase (18) kann in Schließstellung jeweils in die Öffnung der Ringöse (16) eintauchen. Die ein oder mehreren Riegelnasen (18) können an einer Frontseite eine nachfolgend erläuterte Anschrägung (20) aufweisen.

Die Halterung (9) hat eine längliche Form und bietet mehrere Anbau-und Arretierstellungen für die Boxenstange (6). Zu diesem Zweck ist an der Halterung (9) die Riegelleiste (19) angeordnet, die sich längs der Halterung (9) erstreckt und eine entsprechende Zahl von Riegelnasen (18) aufweist.

Die Riegelnasen (18) sind in einer Reihe übereinander an einem Längsrand der Riegelleiste (19) angeordnet. Sie sind dabei jeweils über eine Auskehlung gegenüber dem Leistenkorpus freigestellt. Die Riegelnasen (18) sind in Längsrichtung der Halterung (9) und der Riegelleiste (19) ausgerichtet. Vorzugsweise ragen sie dabei nach oben. Oberhalb der Riegelnasenspitze ist in der Auskehlung ein Freiraum ausgebildet, der gleich oder größer als die Höhe der Ringöse (16) ist.

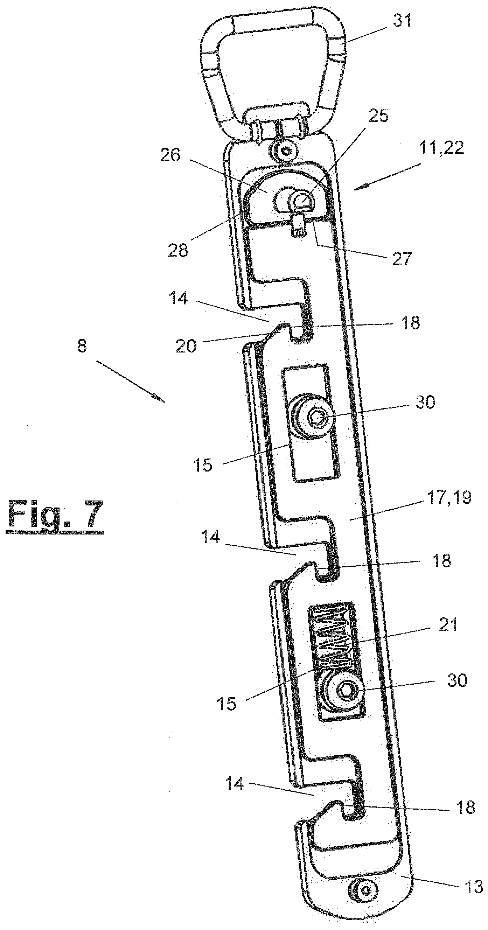

Das Arretiermittel (17) ist in oder an einem Gehäuse (13) der Halterung (9) aufgenommen. Das Arretiermittel (17) ist dort mit einer z.B. linearen Führung (15) und einer Feder (21) verbunden. Figur 7 und 8 zeigen diese Anordnung in aufgebrochener bzw. geschnittener Front- und Rückansicht für das Beispiel einer Riegelleiste (19). Die Feder (21) ist gehäusefest abgestützt und drückt die Riegelleiste (19) in die Riegelstellung nach oben.

Die Führung (15) kann von den Seitenrändern des Gehäuses (13) gebildet werden. Alternativ oder zusätzlich kann die Führung (15) von ein oder mehreren länglichen Ausschnitten in der Riegelleiste (19) gebildet werden, die parallele, längs der Halterung (9) ausgerichtete Ränder aufweisen und hier mit einem zentralen Führungsstift zusammenwirken. Die gezeigten zwei Ausnehmungen und zwei Führungsstifte bilden miteinander eine Geradführung in Längsrichtung der Halterung (9) und der Riegelleiste (19). Die Feder (21) kann in einer Ausnehmung angeordnet und an einem Führungsstift abgestützt sein. Das Gehäuse (13) kann in Längsrichtung und in seiner Hauptebene teilbar sein.

Die Halterung (9) weist an ihrem Gehäuse (13) eine oder mehrere maulartige Aufnahmen (14) auf, in die das Arretiermittel (16) an der Boxenstange (6) eingeführt werden kann. Die maulartigen Aufnahmen (14) sind schlitzartig ausgebildet. Sie sind am Gehäuserand, insbesondere am einen, in Fahrtrichtung (12) vorderen Längsrand der Halterung (9) angeordnet. Die Maulöffnung der Aufnahme (14) mündet an diesem Gehäuserand. Außerdem sind die Aufnahmen (14) an der zur Innenseite der Tierbox (3) weisenden Gehäusewand offen. Das Arretiermittel (16) der Boxenstange (6) kann in die Aufnahme (14) entgegen der Fahrtrichtung (12) eingesteckt und in Gegenrichtung wieder entnommen werden. Es kann in der Aufnahme (14) arretiert und kippsicher geführt werden.

In die eine oder mehreren Aufnahmen (14) ragt jeweils eine Riegelnase (18). Sie ist dabei vom geschlossenen Ende der Aufnahme in Richtung zum besagten vorderen Gehäuserand distanziert. Die Aufnahme (14) hat eine an die Höhe und die Außenkontur des Arretiermittels (16) angepasste Formgebung, z.B. eine Quaderform. Die Aufnahme (14) kann sich in ihre Tiefe senkrecht zum besagten vorderen Gehäuserand erstrecken.

Die Löseeinrichtung (11) beaufschlagt das halterungsseitige Arretiermittel (17). Bei Betätigung drückt sie das Arretiermittel (17) gegen die Kraft der Feder (21) weg und bringt die Riegelnase (18) außer Eingriff mit der Öse des stangenseitigen Arretiermittels (16). Die Boxenstange (6) kann dann von der Halterung (9) abgenommen werden.

In einem eigenständigen Erfindungsgedanken ist vorgesehen, dass die Löseeinrichtung (11) an der Halterung (9) angeordnet ist und ein auf die Arretierung (10) wirkendes Lösemittel (22) aufweist, das mit mehreren Bedienmitteln (23,24) verbunden ist, die innerhalb und außerhalb der Tierbox (3) angeordnet werden können oder angeordnet sind. Die Ausgestaltung der Löseeinrichtung (11) und ihres Lösemittels (22) sowie der Arretierung (10) und ihrer Arretiermittel (16,17) kann dabei variieren und unterschiedlich konstruktiv ausgeführt sein. In einer bevorzugten Ausgestaltung weist die Löseeinrichtung (11) ein auf die Arretierung (10) wirkendes Lösemittel (22) auf, das als Drehsteller ausgebildet ist.

In den gezeigten Ausführungsbeispielen weist der Drehsteller (20) eine auf die Arretierung (10) wirkende Drehnocke (26) und ein damit wirkverbundenes drehbares Bedienmittel (23,24) auf. Ein drehbares Bedienmittel (23) ist als Drehknopf ausgebildet und z.B. an der Innenseite der Tierbox (3) angeordnet. Ein anderes drehbares Bedienmittel (24) ist als länglicher Drehgriff ausgebildet und an der Außenseite der Tierbox (3) angeordnet. Die Drehnocke (26) und die drehbaren Bedienmittel (23,24) weisen eine gemeinsame Drehachse (25) auf und sind drehfest miteinander verbunden. Bei der Drehung eines Bedienmittels (23,24) wird die Drehnocke (26) um die von einer gemeinsamen Welle gebildete Drehachse (25) verschwenkt und löst die Arretierung. Sie wirkt dabei auf das Arretiermittel (17), insbesondere die Riegelleiste (19), an der Halterung (9) ein.

Die Löseeinrichtung (11) ist z.B. am oberen Ende der Halterung (9) angeordnet. Die Drehnocke (26) befindet sich im Innenraum des Gehäuses (13). Sie ist hier zusammen mit dem Arretiermittel (17), insbesondere der Riegelleiste (19), in einer gemeinsamen Nut eines schalenförmigen Gehäuseteils aufgenommen. Die Drehachse (25) bzw. Welle durchsetzt das Gehäuse (13) in Querrichtung. Die Drehnocke (26) weist einen ebenen Nockenabschnitt (27) auf, der sich an der Nockenunterseite befindet. Er ist beidseits, insbesondere symmetrisch, zu der zentralen Drehachse (25) der Drehnocke (26) ausgerichtet. Der ebene Nockenabschnitt (27) ist quer zur Längsachse der Halterung (8) und der Riegelleiste (19) ausgerichtet. Er wirkt mit dem ebenfalls quer gerichteten und ebenen oberen Rand der Riegelleiste (19) zusammen. Die von der Feder (21) angedrückte Riegelleiste (19) stabilisiert die Drehlage des Drehnocken (26).

An den ebenen Nockenabschnitt (27) schließen sich an einer oder beiden Rändern quer gerichtete andere Nockenabschnitte (28) an, wobei die Nockenabschnitte (27,28) durch eine Rundung verbunden sind. Die Nockenabschnitte (27,28) befinden sich am Umfang der scheibenförmigen Drehnocke (26).

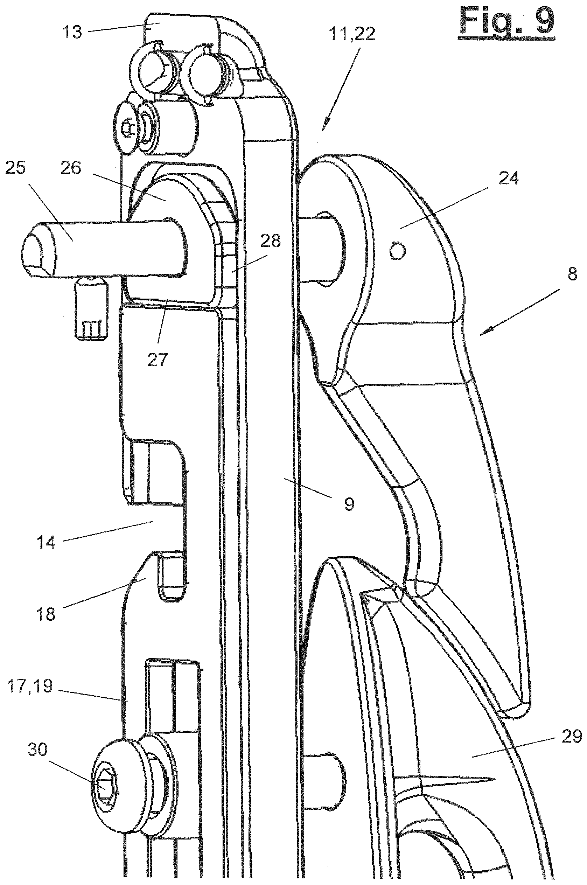

Die drehfeste Verbindung der Bedienmittel (23,24) und der Drehnocke (26) mit der Drehachse oder Welle (25) kann durch Formschluss, z.B. durch die gezeigte Abflachung oder Schlüsselfläche, gebildet werden. An einem Bedienmittel (23,24) kann außerdem eine in Figur 7 und 9 angedeutete und gegen die Schlüsselfläche gerichtete Klemmschraube angeordnet sein.

Die Halterung (9) kann an der Boxen- oder Aufbauwand (4) in geeigneter Weise montiert und mittels mehrerer Befestigungsmittel (30), z.B. Schrauben, fixiert werden. Die Befestigungsmittel (30) können die vorerwähnten Führungsstifte der Führung (15) bilden. Die Abstützung der innenseitigen Halterung (9) kann an der Außenseite der Boxen- oder Aufbauwand (4) über ein hier anliegendes Stützmittel (29) erfolgen, das mit den durch die Wand (4) ragenden Befestigungsmitteln (30) verbunden wird. Das Stützmittel (29) kann z.B. als Stützplatte mit Griff ausgeführt sein.

Die Drehachse (25) bzw. die Welle kann sich ebenfalls durch die Boxen- oder Aufbauwand (4) erstrecken. Sie ist am außenseitigen Ende drehfest mit dem äußeren Bedienmittel (24) verbunden, welches z.B. als exzentrischer Drehgriff ausgebildet ist. Der andere Griff (29) kann z.B. als Abstützung für die manuellen Drehkräfte benutzt werden.

Bei Betätigung eines der Bedienmittel (23,24) wird der Drehnocken (26) aus der in Figur 8 und 9 gezeigten Position gedreht und drückt dabei die Riegelleiste (19) mit ihren Riegelnasen (18) gegen die Feder (21) nach unten. Hierbei wird der Arretierungseingriff zwischen den Arretiermitteln (16,17) gelöst. Nach Loslassen des Bedienelements (23,24) drückt die Feder (21) das Arretierelement (17), insbesondere die Riegelleiste (19), wieder in die gezeigte verriegelungs- und arretierbereite bzw. arretierfähige Riegelposition.

Über die Bedienelemente (23,24) kann die Löseeinrichtung (11) von einer innerhalb oder außerhalb der Tierbox (3) befindlichen Person betätigt werden. Die Sicherungseinrichtung (8) kann in der gezeigten Ausführungsform mit den beidseitigen Bedienmitteln (23,24) eine Paniksicherung bilden. Wenn ein Tier (2) in der Tierbox (3) in Panik gerät, kann durch Betätigung der Löseeinrichtung (11) von außerhalb der Tierbox (3) die Arretierung (10) gelöst werden, so dass das Tier (2) die Bruststange (6) von sich weg und zum nächstgelegenen, insbesondere vorderen Boxenende wegdrücken kann und seinen Bewegungsraum vergrößern kann.

Bei der gezeigten Anordnung liegt das vordere Boxenende in Fahrtrichtung (12) vorn. Wenn alternativ oder zusätzlich eine Sicherungseinrichtung (8) und eine Boxenstange (6) am hinteren Boxenende angeordnet sind, ist ein Wegdrücken im Panikfall nach hinten möglich.

Wie Figur 5 und 9 verdeutlichen, kann über das boxenexterne Bedienmittel (24), die Betriebsstellung der Sicherungseinrichtung (8) und der Löseeinrichtung (11) sowie der Arretierung (10) signalisiert werden. Das z.B. als länglicher Drehgriff ausgebildete Bedienmittel (24) erstreckt sich mit seinem Griffteil nach unten und zeigt dadurch die Arretierstellung bzw. Schließstellung der Löseeinrichtung (11) an. Das Griffteil ragt zum unteren Griff (29) hin. Es kann hier über einen formschlüssigen und federnden Rasteingriff in seiner Ausgangslage gesichert werden, z.B. gegen Erschütterungen im Fahrbetrieb.

Die Halterung (9) kann weitere Teile aufweisen, beispielsweise kann am oberen Gehäuserand ein Ringbeschlag (31) schwenkbar gelagert sein, der zum Anbinden des Tieres (2) oder zu anderen Zwecken dienen kann.

Die Sicherungseinrichtung (8), insbesondere die Halterung (9), kann eine Anzeige (35) für die Funktion oder den Zustand der Arretierung (10) aufweisen. Die Anzeige (35) kann dabei mit dem Arretiermittel (17) an der Halterung (9), insbesondere der Riegelleiste (19), wirkverbunden sein. Die Anzeige (35) kann unterschiedlich ausgebildet sein und kann vom Bediener auf unterschiedliche Weise erfasst werden. Vorzugsweise befindet sich die Anzeige (35) innerhalb der Tierbox (3), wobei sie alternativ oder zusätzlich an deren Außenseite, insbesondere des dortigen Bedienmittels (24), angeordnet sein kann. Die Anzeige (35) kann einzeln oder mehrfach vorhanden sein.

Figur 10 zeigt eine bevorzugte Ausführungsform einer optischen Anzeige (35). Am unteren Ende der Riegelleiste (19) ist ein Zapfen angebracht, der nach unten ragt und durch eine Öffnung im unteren Bereich des Gehäuses (13) geführt ist. Der Zapfen trägt am Ende eine Farbmarkierung, z.B. in einer Warnfarbe. Bei der gezeigten Schließstellung oder Aktivierungsstellung der Arretierung (10) befinden sich der Zapfen und die Farbmarkierung innerhalb des Gehäuses (13) und sind von außen nicht sichtbar. In Lösestellung der Arretierung (10) wird die Riegelleiste (19) nach unten bewegt, wodurch der Zapfen durch die Gehäuseöffnung tritt und die Farbmarkierung sichtbar wird und die Lösestellung signalisiert.

Alternativ kann die Anzeige (35) in beliebig anderer Weise ausgebildet sein. Sie kann z.B. ein seitlich aus dem Gehäuse (13) ragendes und mit einer Öffnungsmarkierung zusammenwirkendes Anzeigemittel haben. Alternativ kann eine Anzeige (35) auch der Löseeinrichtung (11), insbesondere einem oder mehreren Arretiermitteln (16,17) zugeordnet sein. Eine Anzeige kann auch mit einer Sensorik zusammenwirken.

Die Anzeige (35) kann in Abwandlung der gezeigten Ausführungsform die Schließstellung oder sämtliche Betriebsstellungen der Arretierung (10) anzeigen. Sie kann dabei mit einer Skala, einer Markierung oder einem anderen Warnmittel zusammenwirken. Die Anzeige kann auch auf andere Weise signalisieren, z.B. akustisch mittels Tonerzeuger oder ein bewusstes Einrast- oder Knackgeräusch bei Einnahme der Schließstellung.

Figur 11 verdeutlicht eine zweite Variante der vorbeschriebenen Löseeinrichtung (11). Bei der vorbeschriebenen ersten Variante sind die Bedienmittel (23,24) coaxial zur Drehachse (25) angeordnet und miteinander drehfest verbunden, z.B. durch eine gemeinsame Welle entlang der Achse (25).

In der Variante von Figur 11 sind die innerhalb und außerhalb der Tierbox (3) anordenbaren bzw. angeordneten Bedienmittel (23,24) getrennt und unabhängig voneinander bedienbar. Figur 11 zeigt außerdem, dass zumindest ein Bedienmittel (23,24) eine Bedienungssicherung (34) aufweist. Vorzugsweise ist dem außerhalb der Tierbox (3) anordenbaren oder angeordneten Bedienmittel (24) eine Bedienungssicherung (34) zugeordnet. Die Bedienungssicherung (34) sichert das beaufschlagte Bedienmittel (23,24) gegen Fehlbedienung, Fehlfunktion oder dgl.. Sie kann insbesondere das beaufschlagte Bedienmittel (23,24) blockieren, vorzugsweise per Formschluss.

Die eigenständige Bedienbarkeit der Bedienmittel (23,24) und die Bedienungssicherung (34) können einander ergänzen. Die eigenständige Bedienbarkeit ermöglicht z.B. ein Bedienen oder Betätigen der Arretierung (10) durch das boxeninterne Bedienmittel (23), insbesondere den Drehknopf, wobei das boxenexterne Bedienmittel (24) durch die Bedienungssicherung (34) aus Sicherheitsgründen blockiert ist. Andererseits kann zur Panikentriegelung das boxenexterne Bedienmittel (24) betätigt werden, auch wenn eine Bediensicherung (34) das boxeninterne Bedienmittel (23) blockiert oder sperrt.

Die innerhalb und außerhalb der Tierbox (3) anordenbaren oder angeordneten Bedienmittel (23,24) können voneinander entkoppelt sein und können unabhängig voneinander mit der Arretierung (10) wirkverbunden sein. Die Arretierung (10) kann dadurch wahlweise vom einen und/oder anderen Bedienmittel (23,24) betätigt werden. Für die Ausgestaltung der Entkopplung der Bedienmittel (23,24) gibt es verschiedene Möglichkeiten.

Im gezeigten Ausführungsbeispiel von Figur 11 sind die drehbaren Bedienmittel (23,24) voneinander drehentkoppelt und sind unabhängig voneinander drehbar. Sie sind dabei jeweils mit einer eigenen Drehnocke (26,26') drehfest verbunden. Die drehbaren Bedienmittel (23,24) sind koaxial zur gemeinsamen Drehachse (25) angeordnet und haben jeweils eine eigene Welle (32,32'), die am einen Ende mit dem jeweiligen Bedienmittel (23,24) und am anderen Ende mit der zugehörigen Nocke (26,26') verbunden ist.

Die Wellen (32,32') können als Hohlwellen ausgeführt und mit einer gemeinsamen Ausrichtung bzw. Lagerung (33) versehen sein. Diese kann z.B. von einer Lagerstange (33) gebildet werden, welche die Hohlwellen (32,32') axial durchsetzt und für deren gegenseitige Ausrichtung und Innenlagerung sorgt. Außenseitig können die Wellen (32,32') an der Halterung (9) und/oder an der Boxenwand (4) oder Zwischenwand (5) gelagert sein.

Die Nocken (26,26') können gleichartig ausgebildet und koaxial zur Drehachse (25) hintereinander angeordnet sein. Sie wirken eigenständig mit dem Arretiermittel (17), insbesondere der Riegelleiste (19), zusammen. Die Nockenausbildung kann ansonsten die gleiche wie in der vorbeschriebenen ersten Variante sein.

Die Bedienungssicherung (34) kann in unterschiedlicher Weise ausgebildet sein. Sie ist in Figur 11 schematisch dargestellt und dort dem boxenexternen Bedienmittel (24) zugeordnet. Die Bedienungssicherung (34) ist vorzugsweise derart ausgebildet, dass sie mit einer zusätzlichen Bedienbewegung gelöst werden kann. Die besagte Ausbildung kann insbesondere eine Zweihandbedienung erfordern. Die Bedienungssicherung (34) kann insbesondere als federbelastete Verriegelung, als Schloss oder dergleichen ausgebildet sein.

In Figur 11 ist ein federbelasteter Sperrhebel angedeutet, der das boxenexterne Bedienmittel (24) festhält und erst gelöst werden muss, bevor das Bedienmittel (24) betätigt, insbesondere gedreht werden kann. Der Sperrhebel kann außenseitig an der Wandung (4,5) oder am Stützmittel (29) angeordnet sein. In einer Abwandlung kann das Bedienmittel (24) verschieblich auf seiner Welle (32') angeordnet sein, wobei zur Herstellung der Drehschlüssigkeit eine Zusatzbewegung erforderlich ist, z.B. ein Eindrücken oder Herausziehen des Bedienelements (24). Erst dann kann die Arretierung (10) betätigt werden. Ansonsten sind beliebige andere konstruktive Ausgestaltungen und Funktionen einer Bedienungssicherung (34) möglich.

Abwandlungen der gezeigten und beschriebenen Ausführungsformen sind in verschiedener Weise möglich. Insbesondere können die Merkmale der vorbeschriebenen Ausführungsbeispiele und ihre Abwandlungen beliebig miteinander kombiniert, insbesondere auch vertauscht werden.

In einer Variante kann die Sicherungseinrichtung (8) bzw. ihre Löseeinrichtung (11) nur ein Bedienmittel (23,24) aufweisen, welches innerhalb oder außerhalb der Tierbox (3) angeordnet werden kann oder angeordnet ist. Ferner kann die konstruktive Ausbildung und das Zusammenwirken der Arretiermittel (16,17) und auch der Aufnahme (14) variiert werden. Das Arretiermittel (17) kann eine einzelne Riegelnase (18) aufweisen. In einer Variante kann das stangenseitige Arretiermittel (16) als Riegel und das halterungsseitige Arretiermittel (17) als Riegelaufnahme, insbesondere als Ringöse, ausgestaltet sein.

Bei den gezeigten Ausführungsbeispielen haben die Riegelnasen (18) an ihrer zur Einführöffnung weisenden Seite die besagte Anschrägung (20), die ein federndes Eindrücken der Haltestange (6) in die Arretierstellung ermöglichen. Die andere Seite der Riegelnase ist als Anschlagfläche für die Arretierung ausgebildet. Sie kann parallel zum Ösenmantel ausgerichtet sein und kann dadurch auch hohen Belastungen widerstehen. In einer anderen Ausführungsform kann diese Seite auch in Gegenrichtung angeschräg sein, um bei übermäßiger Krafteinwirkung auf die Boxenstange (6), z.B. durch ein in Panik geratenes Tier (2), ein Ausschnappen und Öffnen der Arretierung (10) und der Boxenstange (6) zu ermöglichen. Diese Funktion kann auch bei anderen Ausgestaltungen der Arretierung (10) gegeben sein.

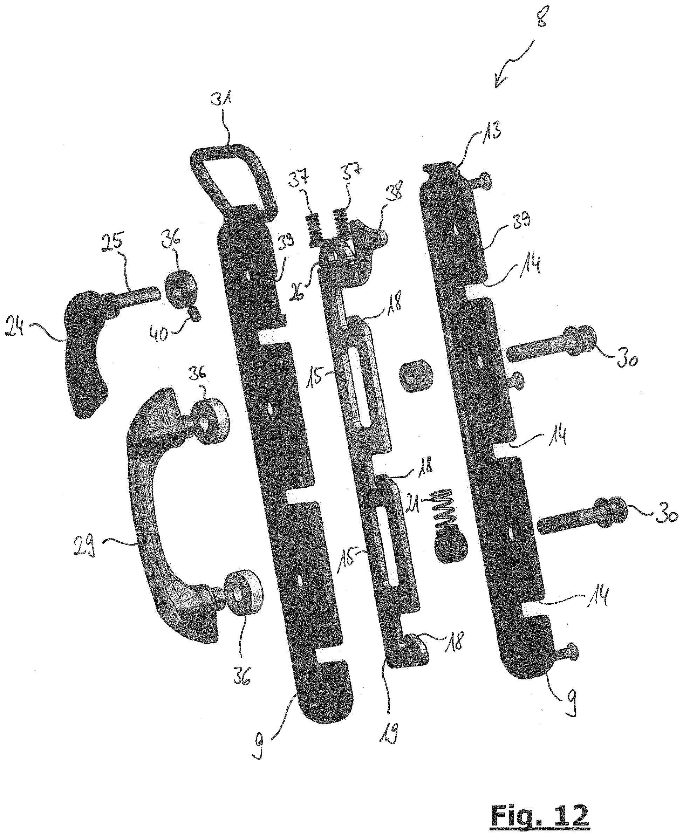

Fig. 12 zeigt eine weitere Variante der Sicherungseinrichtung (8) in einer Explosionsdarstellung. Im Wesentlichen entspricht die Konstruktion dieser Variante der vorgehenden Beschreibung, wobei das innere Bedienmittel (23) eine andere Gestaltung aufweist. Außerdem ist das äußere Bedienmittel (24) um eine eigenständige Rückstellfunktion ergänzt. Konkret weist die Sicherungseinrichtung (8) gemäß Fig. 12 ein Gehäuse (13) auf, das eine Halterung (9) bildet. Am Gehäuse (13) kann außenseitig ein Stützmittel, insbesondere ein Griff (29), angeordnet sein. Zwischen dem Griff (29) und der Halterung (9) bzw. dem Gehäuse (13) sind zusätzlich Abstandshalter (36) vorgesehen. Die Abstandshalter (36) sind im Einbauzustand der Sicherungseinrichtung (8) vorzugsweise im Inneren eines Pferdetransporters (1) angeordnet. Die Aufbauwand (4) des Pferdetransporters (1) erstreckt sich somit zwischen dem Griff (29) und den Abstandshaltern (36).

Innerhalb des Gehäuses (13) bzw. der Halterung (9) ist die Riegelleiste (19) angeordnet, die wie bei den vorherigen Ausführungsbeispielen mit Führungen (15) versehen ist, welche eine verschiebliche Bewegung der Riegelleiste (19) ermöglichen. Ferner weist die Riegelleiste (19) mehrere Riegelnasen (18) auf, die in Aufnahmen (14) der Halterung (9) hineinragen, um eine Boxenstange (6) arretieren zu können.

Im Unterschied zu den vorherigen Ausführungsbeispielen weist die Sicherungseinrichtung (8) gemäß Fig. 12 keinen Drehknopf als inneres Bedienmittel (23) auf. Vielmehr ist das innere Bedienmittel (23) durch einen Schieber (38) gebildet, der einstückig mit der Riegelleiste (19) ausgebildet ist. Es ist allerdings nicht ausgeschlossen, dass zusätzlich zu dem Schieber (38) ein Drehknopf (23) vorgesehen ist.

Das Gehäuse (13) weist seitlich eine Schieberöffnung (39) auf, durch welche der Schieber (38) nach außen vorsteht, so dass der Schieber (38) aus dem Gehäuse (13) vorragt. Der Schieber (38) ist vorzugsweise griffgünstig geformt, so dass er leicht betätigbar ist. Mittels des Schiebers (38) kann die Riegelleiste (19) gegen die Rückstellkraft der Feder (21) bewegt werden, so dass die Riegelnasen (18) aus ihrem Eingriff mit einer Boxenstange gelangen. Auf diese Weise kann von innen die Sicherungseinrichtung (8) leicht entriegelt werden.

Eine Entriegelung von außen erfolgt vorzugsweise mittels des Drehgriffs (24). Der Drehgriff (24) wirkt mit einer Nocke (26) zusammen, die auf die Riegelleiste (19) einwirkt. Dazu ist der Drehgriff (24) mit einer Welle (25) ausgestattet, die zunächst eine Aufbauwand (4) des Pferdetransporters (1) durchgreift. Zwischen der Aufbauwand (4) und dem Gehäuse (13) der Sicherungseinrichtung (8) ist ferner ein Abstandshalter (36) angeordnet. Die Welle (25) durchgreift auch den Abstandshalter (36), wobei der Abstandshalter (36) drehfest mit der Welle (25) verbunden sein kann. Dazu kann beispielsweise eine Madenschraube (40) verwendet werden, die den Abstandshalter (36) mit der Welle (25) des Drehgriffs (24) arretierend verbindet.

Um zu verhindern, dass durch eine versehentliche Berührung des Drehgriffs (24) eine Entriegelung der Sicherungseinrichtung (8) erfolgt, kann bei der Variante gemäß Fig. 12 bevorzugt vorgesehen sein, dass die Nocke (26) durch einen Bedienmittelrücksteller, insbesondere zwei Federn (37) beaufschlagt ist. Die Federn (37) sind mit einer Kontaktplatte (41) verbunden, die auf der Nocke (26) aufliegt. Dabei sind die Federn (37) jeweils exzentrisch zur Drehachse der Welle (25) angeordnet. Die Federn (37) unterstützen auf diese Weise eine Rückstellung des äußeren Bedienmittels, insbesondere des Drehgriffs (24), in den Verriegelungszustand.

Insbesondere stellen die Federn (37) einen Widerstand dar, der zu überwinden ist, um die Riegelleiste (19) von der Verriegelungsstellung in die Entriegelungsstellung zu bewegen. Dieser Widerstand wirkt jedoch nur auf den Drehgriff (24). Der Schieber (38), der im Fahrzeuginneren angeordnet ist, umgeht die Feder (37) bzw. die Bedienmittelrücksteller (37) und ermöglicht so eine leichtgängige Entriegelung.

### Bezugszeichenliste

- 1: Fahrzeug, Pferdetransporter
- 2: Tier, Pferd
- 3: Tierbox, Pferdebox
- 4: Boxenwand, Aufbauwand
- 5: Zwischenwand
- 6: Boxenstange, Bruststange
- 7: Lagerung
- 8: Sicherungseinrichtung, Paniksicherung
- 9: Halterung
- 10: Arretierung
- 11: Löseeinrichtung
- 12: Fahrtrichtung
- 13: Gehäuse
- 14: Aufnahme, Maul
- 15: Führung
- 16: Arretiermittel, Ringöse
- 17: Arretiermittel, Riegel
- 18: Riegelnase
- 19: Riegelleiste
- 20: Anschrägung
- 21: Rücksteller, Feder
- 22: Lösemittel, Drehsteller
- 23: Bedienmittel innen, Drehknopf
- 24: Bedienmittel außen, Drehgriff
- 25: Drehachse, Welle
- 26: Nocke
- 26': Nocke
- 27: Nockenabschnitt eben
- 28: Nockenabschnitt, Stellabschnitt
- 29: Stützmittel, Griff
- 30: Befestigungsmittel, Schraube
- 31: Ringbeschlag
- 32: Welle, Hohlwelle
- 32': Welle, Hohlwelle
- 33: Lagerung, Lagerstange
- 34: Bedienungssicherung
- 35: Anzeige
- 36: Abstandshalter
- 37: Bedienmittelrücksteller, Feder
- 38: Schieber
- 39: Schieberöffnung
- 40: Madenschraube
- 41: Kontaktplatte

## Patentansprüche

1. Sicherungseinrichtung für eine Boxenstange (6) in einer Tierbox (3), wobei die Sicherungseinrichtung (8) eine an der Tierbox (3) montierbare Halterung (9) mit einer Arretierung (10) für die Boxenstange (6) und einer manuell bedienbaren Löseeinrichtung (11) zum Lösen der Arretierung (10) aufweist, und wobei die Löseeinrichtung (11) an der Halterung (9) angeordnet ist und ein auf die Arretierung (10) wirkendes Lösemittel (22) aufweist,
**dadurch gekennzeichnet, dass**
das Lösemittel (22) mit mehreren Bedienmitteln (23,24) verbunden ist, die innerhalb und außerhalb der Tierbox (3) anordenbar sind, wobei die innerhalb und außerhalb der Tierbox (3) anordenbaren Bedienmittel (23, 24) gemeinsam bedienbar sind oder getrennt und unabhängig voneinander bedienbar sind.

2. Sicherungseinrichtung nach nach Anspruch 1,
**dadurch gekennzeichnet, dass**
die Arretierung (10) zusammenwirkende Arretiermittel (16, 17) an der Halterung (9) und an der Boxenstange (6) aufweist, wobei das eine Arretiermittel (17) an der Halterung (9) beweglich und gegen einen Rücksteller (21) ausweichfähig geführt sowie von der Löseeinrichtung (11) beaufschlagt ist.

3. Sicherungseinrichtung nach Anspruch 1 oder 2,
**dadurch gekennzeichnet, dass**
die innerhalb und außerhalb der Tierbox (3) anordenbaren Bedienmittel (23, 24) voneinander entkoppelbar und getrennt sowie unabhängig voneinander mit der Arretierung (10) wirkverbunden sind.

4. Sicherungseinrichtung nach einem der vorhergehenden Ansprüche,
**dadurch gekennzeichnet, dass**
die Sicherungseinrichtung (8) für das außerhalb der Tierbox (3) anordenbare Bedienmittel (24) eine Bedienungssicherung (34) aufweist.

5. Sicherungseinrichtung nach einem der vorhergehenden Ansprüche,
**dadurch gekennzeichnet, dass**
die Bedienungssicherung (34) in ihrer Sicherungsfunktion das beaufschlagte Bedienmittel (23, 24) blockiert und/oder mit einer zusätzlichen Bedienbewegung lösbar ist.

6. Sicherungseinrichtung nach einem der vorhergehenden Ansprüche,
**dadurch gekennzeichnet, dass**
die Löseeinrichtung (11) ein auf die Arretierung (10) wirkendes Lösemittel (22) aufweist, das als Drehsteller ausgebildet ist, der eine auf die Arretierung (10) wirkende Drehnocke (26) und ein damit wirkverbundenes drehbares Bedienmittel (23, 24) aufweist.

7. Sicherungseinrichtung nach Anspruch 6,
**dadurch gekennzeichnet, dass**
ein drehbares Bedienmittel (23) als Drehknopf und ein anderes drehbares Bedienmittel (24) als länglicher Drehgriff ausgebildet ist.

8. Sicherungseinrichtung nach Anspruch 7,
**dadurch gekennzeichnet, dass**
die drehbaren Bedienmittel (23, 24) drehfest miteinander und mit der Drehnocke (26) verbunden sind oder dass die drehbaren Bedienmittel (23, 24) voneinander drehentkoppelt und unabhängig voneinander drehbar sind.

9. Sicherungseinrichtung nach einem der Ansprüche 2 bis 8,
**dadurch gekennzeichnet, dass**
das Arretiermittel (17) an der Halterung (9) linear beweglich geführt ist und/oder an der Halterung (9) eine einzelne Riegelnase (18) oder eine Riegelleiste (19) mit mehreren Riegelnasen (18) aufweist und/oder dass das Arretiermittel (17) in einem Gehäuse (13) der Halterung (9) aufgenommen ist und dort mit einer linearen Führung (15), einer Feder (21) und dem Lösemittel (22) verbunden ist.

10. Sicherungseinrichtung nach einem der Ansprüche 2 bis 9,
**dadurch gekennzeichnet, dass**
die Halterung (9) an ihrem Gehäuse (13) eine oder mehrere maulartige Aufnahmen (14) zum Einführen des Arretiermittels (16) an der Boxenstange (6) aufweist, wobei eine Riegelnase (18) in eine Aufnahme (14) ragt, und wobei die Riegelnase (18) eine zur Maulöffnung der Aufnahme (14) weisende Anschrägung (20) aufweist.

11. Sicherungseinrichtung nach einem der vorhergehenden Ansprüche,
**dadurch gekennzeichnet, dass**
die Halterung (9) eine Anzeige (35) für die Funktion oder den Zustand der Arretierung (10) aufweist.

12. Sicherungseinrichtung nach Anspruch 11,
**dadurch gekennzeichnet, dass**
die Anzeige (35) mit dem Arretiermittel (17) an der Halterung (9) wirkverbunden ist.

13. Fahrzeug mit einer Tierbox (3) und einer Sicherungseinrichtung (8) für eine Boxenstange (6), wobei die Sicherungseinrichtung (8) eine an der Tierbox (3) montierte Halterung (9) mit einer Arretierung (10) für die Boxenstange (6) und einer manuell bedienbaren Löseeinrichtung (11) für die Arretierung (10) aufweist,
**dadurch gekennzeichnet, dass**
die Sicherungseinrichtung (8) nach mindestens einem der Ansprüche 1 bis 12 ausgebildet ist.

14. Fahrzeug nach Anspruch 13,
**dadurch gekennzeichnet, dass**
die Halterung (9) an der Innenseite einer seitlichen Aufbauwand (4) des Fahrzeugs (1) angeordnet ist.

15. Fahrzeug nach Anspruch 13 oder 14,
**dadurch gekennzeichnet, dass**
ein Bedienmittel (23) der Sicherungseinrichtung (8) an der Innenseite der seitlichen Aufbauwand (4) und/oder ein Bedienmittel (24) an der Außenseite der seitlichen Aufbauwand (4) angeordnet ist/sind.

## Claims

1. Safety device for a box bar (6) in an animal box (3), wherein the safety device (8) has a bracket (9) which can be mounted on the animal box (3), which bracket has a detent mechanism (10) for the box bar (6) and a manually operable release device (11) for releasing the detent mechanism (10), and wherein the release device (11) is arranged on the bracket (9) and has a releasing means (22) which acts on the detent mechanism (10),
**characterized in that**
the releasing means (22) is connected to a plurality of operating means (23, 24) which can be arranged inside and outside of the animal box (3), wherein the operating means (23, 24) which can be arranged inside and outside of the animal box (3) are operable as one or they are operable separately and independently of each other.

2. Safety device according to Claim 1,
**characterized in that**
the detent mechanism (10) includes cooperating locking means (16, 17) on the bracket (9) and on the box bar (6), wherein the one locking means (17) is supported on the bracket (9) movably and yieldingly against a restoring element (21) and is loaded by the release device (11).

3. Safety device according to Claim 1 or 2,
**characterized in that**
the operating means (23, 24) which can be arranged inside and outside of the animal box (3) can be uncoupled from each other and are connected operatively to the detent mechanism (10) separately and independently of each other.

4. Safety device according to any one of the preceding claims,
**characterized in that**
the safety device (8) has an operating safety means (34) for the operating means (24) which can be arranged outside the animal box (3).

5. Safety device according to any one of the preceding claims,
**characterized in that**
the operating safety means (34) in its safety function blocks the loaded operating means (23, 24) and/or can be released with an additional operating movement.

6. Safety device according to any one of the preceding claims,
**characterized in that**
the release device (11) has a releasing means (22) which acts on the detent mechanism (10) and is embodied as a rotary adjuster with a rotary cam (26) that acts on the detent mechanism (10) and has a rotatable operating means (23, 24) operatively connected thereto.

7. Safety device according to Claim 6,
**characterized in that**
one rotatable operating means (23) is designed as a rotary knob and another rotatable operating means (24) is designed as an elongated rotary handle.

8. Safety device according to claim 7,
**characterized in that**
the rotatable operating means (23, 24) are connected rotationally fixed to each other and to the rotary cam (26), or that the rotatable operating means (23, 24) can be rotationally decoupled from each other and are rotatable independently from each other.

9. Safety device according to any one of the Claims 2 to 8,
**characterized in that**
the locking means (17) is supported on the bracket (9) so as to be movable linearly, and/or has a single locking lug (18) or a locking bar (19) with a plurality of locking lugs (18) on the bracket (9), and/or that the locking means (17) is accommodated in a housing (13) of the bracket (9), where it is connected to a linear guide (15), a spring (21) and the releasing means (22) .

10. Safety device according to any one of the Claims 2 to 9,
**characterized in that**
the bracket (9) has one or more jaw-like receiving recesses (14) on its housing (13) for insertion of the locking means (16) on the box bar (6), wherein a locking lug (18) projects into a receiving recess (14), and wherein the locking lug (18) has an inclined surface (20) sloping towards the jaw opening of the receiving recess (14).

11. Safety device according to any one of the preceding claims,
**characterized in that**
the bracket (9) has a display (35) for the function or the state of the detent mechanism (10).

12. Safety device according to Claim 11,
**characterized in that**
the display (35) is operatively connected to the locking means (17) on the bracket (9).

13. Vehicle with an animal box (3) and a safety device (8) for a box bar (6), wherein the safety device (8) has a bracket (9) which is mounted on the animal box (3), which bracket has a detent mechanism (10) for the box bar (6) and a manually operable release device (11) for the detent mechanism (10),
**characterized in that**
the safety device (8) is designed according to at least one of Claims 1 to 12.

14. Vehicle according to Claim 13,
**characterized in that**
the bracket (9) is arranged on the inside of a lateral superstructure wall (4) of the vehicle (1).

15. Vehicle according to Claim 13 or 14,
**characterized in that**
one operating means (23) of the safety device (8) is arranged the inside of the lateral superstructure wall (4) and/or one operating means (24) is arranged on the outside of the lateral superstructure wall (4).

## Revendications

1. Dispositif de sécurité pour une barre de poitrail (6) dans une stalle (3), sachant que le dispositif de sécurité (8) comporte une fixation (9) montable sur la stalle (3) avec un blocage (10) pour la barre de poitrail (6) et un dispositif de desserrage (11) actionnable à la main pour desserrer le blocage (10) et sachant que le dispositif de desserrage (11) est disposé sur la fixation (9) et comporte un moyen de desserrage (22) agissant sur le blocage (10),
**caractérisé en ce que**
le moyen de desserrage (22) est relié à plusieurs moyens d'actionnement (23, 24), qui peuvent être disposés à l'intérieur et à l'extérieur de la stalle (3), sachant que les moyens d'actionnement (23, 24) pouvant être disposés à l'intérieur et à l'extérieur de la stalle (3) peuvent être actionnés en commun ou peuvent actionnés séparés ou indépendamment l'un de l'autre.

2. Dispositif de sécurité selon la revendication 1,
**caractérisé en ce que**
le blocage (10) comporte des moyens de blocage coopérants (16, 17) sur la fixation (9) et sur la barre de poitrail (6), sachant qu'un moyen de blocage (17) est guidé de façon mobile sur la fixation (9) et peut être guidé de façon écarté contre un élément de rappel (21) et sollicité par le dispositif de desserrage (11).

3. Dispositif de sécurité selon la revendication 1 ou 2,
**caractérisé en ce que**
les moyens d'actionnement (23, 24) pouvant être disposés à l'intérieur et à l'extérieur de la stalle (3) peuvent être découplés l'un de l'autre et sont reliés au blocage (10) de façon fonctionnelle séparément et indépendamment l'un de l'autre.

4. Dispositif de sécurité selon l'une quelconque des revendications précédentes,
**caractérisé en ce que**
le dispositif de sécurité (8) comporte une sécurité de commande (34) pour le moyen d'actionnement (24) pouvant être disposé à l'extérieur de la stalle (3).

5. Dispositif de sécurité selon l'une quelconque des revendications précédentes,
**caractérisé en ce que**
la sécurité de commande (34) bloque dans sa fonction de fixation le moyen d'actionnement sollicité (23, 24) et/ou peut être libérée avec un mouvement de commande supplémentaire.

6. Dispositif de sécurité selon l'une quelconque des revendications précédentes,
**caractérisé en ce que**
le dispositif de desserrage (11) comporte un moyen de desserrage (22) agissant sur le blocage (10), qui est constitué comme un actuateur rotatif, qui comporte une came rotative (26) agissant sur le blocage (10) et un moyen d'actionnement (23, 24) rotatif relié de façon fonctionnelle avec celle-ci.

7. Dispositif de sécurité selon la revendication 6
**caractérisé en ce qu'**
un moyen d'actionnement rotatif (23) est constitué comme un bouton rotatif et un autre moyen d'actionnement rotatif (24) constitué comme une poignée tournante longitudinale.

8. Dispositif de sécurité selon la revendication 7,
**caractérisé en ce que**
les moyens d'actionnement rotatifs (23, 24) sont reliés solidaires de façon fixe en rotation l'un à l'autre et à la came rotative (26) ou **en ce que** les moyens d'actionnement rotatifs (23, 24) sont découplés en rotation l'un de l'autre et peuvent tourner indépendamment l'un de l'autre.

9. Dispositif de sécurité selon l'une quelconque des revendications 2 à 8,
**caractérisé en ce que**
le moyen de blocage (17) est guidé mobile sur la fixation (9) de façon linéaire et/ou comporte sur la fixation (9) un ergot de verrouillage individuel (18) ou une languette de verrouillage (19) avec plusieurs ergots de verrouillage (18) et/ou **en ce que** le moyen de blocage (17) est logé dans un boîtier (13) de la fixation (9) et y est relié à un guidage linéaire (15), un ressort (21) et au moyen de desserrage (22).

10. Dispositif de sécurité selon l'une quelconque des revendications 2 à 9,
**caractérisé en ce que**
la fixation (9) comporte sur son boîtier (13) un ou plusieurs logements de type mâchoire (14) pour introduire le moyen de blocage (16) sur la barre de poitrail (6), sachant qu'un ergot de verrouillage (18) se dresse dans un logement (14) et sachant que l'ergot de verrouillage (18) comporte un chanfrein (20) tourné vers l'ouverture de mâchoire du logement (14).

11. Dispositif de sécurité selon l'une quelconque des revendications précédentes,
**caractérisé en ce que**
la fixation (9) comporte un affichage (35) pour le fonctionnement ou l'état du blocage (10).

12. Dispositif de sécurité selon la revendication 11,
**caractérisé en ce que**
l'affichage (35) est relié de façon fonctionnelle au moyen de blocage (17) sur la fixation (9).

13. Véhicule avec une stalle (3) et un dispositif de sécurité (8) pour une barre de poitrail (6), sachant que le dispositif de sécurité (8) comporte une fixation (9) montée sur la stalle (3) avec un blocage (10) pour la barre de poitrail (6) et un dispositif de desserrage (11) actionnable à la main pour le blocage (10),
**caractérisé en ce que**
le dispositif de sécurité (8) est constitué selon au moins l'une quelconque des revendications 1 à 12.

14. Véhicule selon la revendication 13,
**caractérisé en ce que**
la fixation (9) est disposée sur le côté intérieur d'une paroi de montage latérale (4) du véhicule (1).

15. Véhicule selon la revendication 13 ou 14, **caractérisé en ce qu'**
un moyen d'actionnement (23) du dispositif de sécurité (8) est disposé sur le côté intérieur de la paroi de montage latérale (4) et/ou un moyen d'actionnement (24) est disposé sur le côté extérieur de la paroi de montage latérale (4).
